# EUROPEAN PATENT SPECIFICATION

(11) **EP 0 715 982 B1**
(45) Date of publication and mention of the grant of the patent: **10.03.1999**
(21) Application number: 95117723.7
(22) Date of filing: 09.11.1995
(51) Int. Cl.: B60K 1/04, B62K 19/30

(54) **Battery case mounting structure for motor-driven vehicle**
Vorrichtung zur Befestigung des Batterie-Behälters eines Kraftfahrzeugs
Dispositif de fixation d'un réceptacle de batterie pour véhicule à moteur

(30) Priority: 07.12.1994 JP 331225/94
(43) Date of publication of application: 12.06.1996
(73) Proprietor: HONDA GIKEN KOGYO KABUSHIKI KAISHA, Minato-ku Tokyo 107 (JP)
(72) Inventor: Igushi, Hiroaki, c/o K.K. Honda Gijutsu Kenkyusho, Wako-shi, Saitama (JP); Tamaki, Kenji, c/o K.K. Honda Gijutsu Kenkyusho, Wako-shi, Saitama (JP); Yamaguchi, Masaaki, c/o K.K. Honda Gijutsu Kenky., Wako-shi, Saitama (JP); Nakazawa, Yoshihiro, c/o K.K. Honda Gijutsu Kenky., Wako-shi, Saitama (JP); Iseno, Mitsuru, c/o K.K. Honda Gijutsu Kenkyusho, Wako-shi, Saitama (JP)
(74) Representative: Liska, Horst, Dr.-Ing.

(56) References cited:
- EP-A- 0 636 536
- EP-A- 0 686 550
- DE-A- 3 150 652
- US-A- 4 709 974
- US-A- 5 368 122
- PATENT ABSTRACTS OF JAPAN vol. 018, no. 136 (M-1572), 7 March 1994 & JP 05 319104 A (YAMAHA MOTOR CO LTD), 3 December 1993,

## Description

The present invention relates to a battery case mounting structure for a motor-driven vehicle.

A battery case mounting structure for a motor-driven bicycle of a type using a motor as an auxiliary motive-power has been disclosed, for example, in Japanese Patent Laid-open No. Hei 5-319104. In this structure, the rear portion of a battery case provided with a battery-side connector is fitted into and supported by a supporting case provided on a frame of a motor-driven bicycle, and the battery-side connector is connected to a motor-side connector provided in the supporting case.

Such a battery case must be easily mounted to or dismounted from the supporting case. Also, upon mounting of the battery case, terminals of the motor-side connector and the battery-side connector are required to be accurately connected to each other, because a connection play between the terminals causes wear of contacts.

In the above battery case mounting structure, however, the terminals of both the connectors are positioned by fitting of the battery case to the supporting case. Consequently, the accuracy of the connection between the contacts are greatly affected by manufacturing errors of the battery case and the supporting case.

EP 0 686 550 A which is prior art according to Art. 54(3) and (4) EPC shows a similar battery mounting structure. There, the battery case can be lifted up by a handle when a locking device for locking the battery case in a mounting position is released.

It is the object of the invention to provide a battery case mounting structure, wherein an unstable condition of the battery case can be easily observed visually.

To achieve this object according to the present invention there is provided a battery case mounting structure according to claims 1 or 4.

When the lock device is released, the pop-up lever mechanism lifts elastically the battery case to the pop-up position, so that an unstable condition of the battery case can be visually observed.

Further, the positioning projection is provided on either the battery-side connector or the motor-side connector, and a positioning recess for receiving the positioning projection is provided on the other one. Therefore, the electrical connection between the contacts is not affected by manufacturing errors of the battery case and the supporting case.

Preferred embodiments of the invention are now described under reference to the drawings, wherein:
Fig. 1 is a side view of essential portions of a front frame in a first embodiment of the present invention.
Fig. 2 is a side view of a bicycle provided with an auxiliary motive-power in the first embodiment.
Fig. 3 is a sectional view taken along the line 3-3 of Fig. 1.
Fig. 4 is a sectional view of a battery case in the first embodiment, with parts partially cut away.
Fig. 5 is a view showing a front-side mounting structure of the battery case in the first embodiment.
Fig. 6 is a view showing essential portions of the front-side mounting structure of the battery case, as seen from the direction of the arrow Z.
Fig. 7 is a view showing a rear-side mounting structure of the battery case in the first embodiment.
Fig. 8 is a side view of a motor-side female connector.
Fig. 9 is a front view of Fig. 8.
Fig. 10 is a plan view of Fig. 8.
Fig. 11 is an enlarged view of a positioning projection.
Fig. 12 is a front view of a battery-side male connector.
Fig. 13 is a rear view of Fig. 12.
Fig. 14 is a plan view of Fig. 12.
Fig. 15 is a side view of Fig. 12.
Fig. 16 is a perspective front view of a battery-side female connector in a second embodiment.
Fig. 17 is a rear view of Fig. 16.
Fig. 18 is a side view of Fig. 16.
Fig. 19 is a bottom view of Fig. 16.
Fig. 20 is a sectional view taken along the line 20-20 of Fig. 17.
Fig. 21 is a sectional view taken along the line 21-21 of Fig. 17.
Fig. 22 is a front view of a motor-side male connector in the second embodiment.
Fig. 23 is a sectional view taken along the line 23-23 of Fig. 22.
Fig. 24 is a sectional view taken along the line 24-24 of Fig. 22.

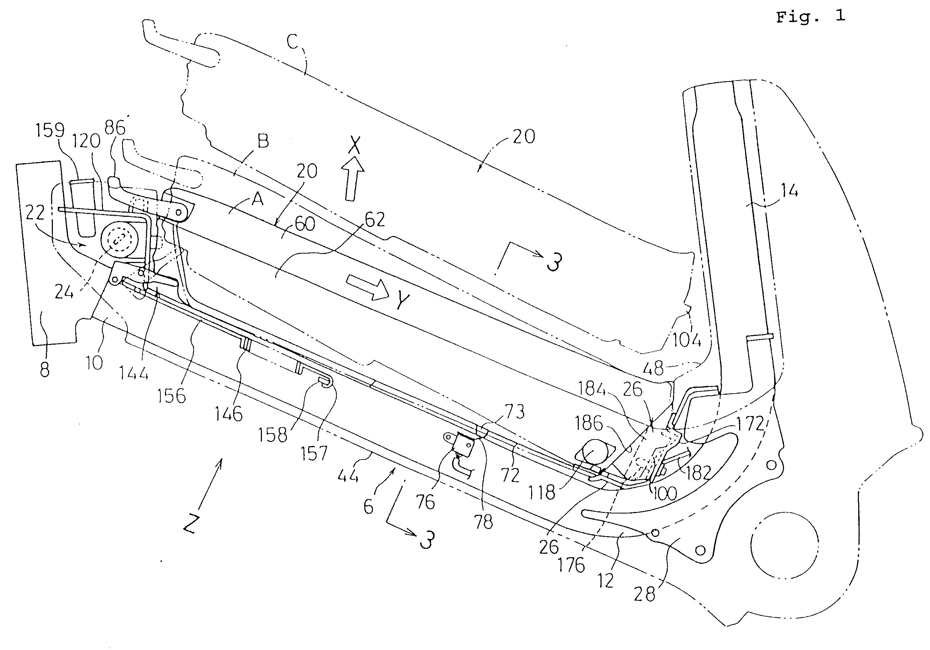

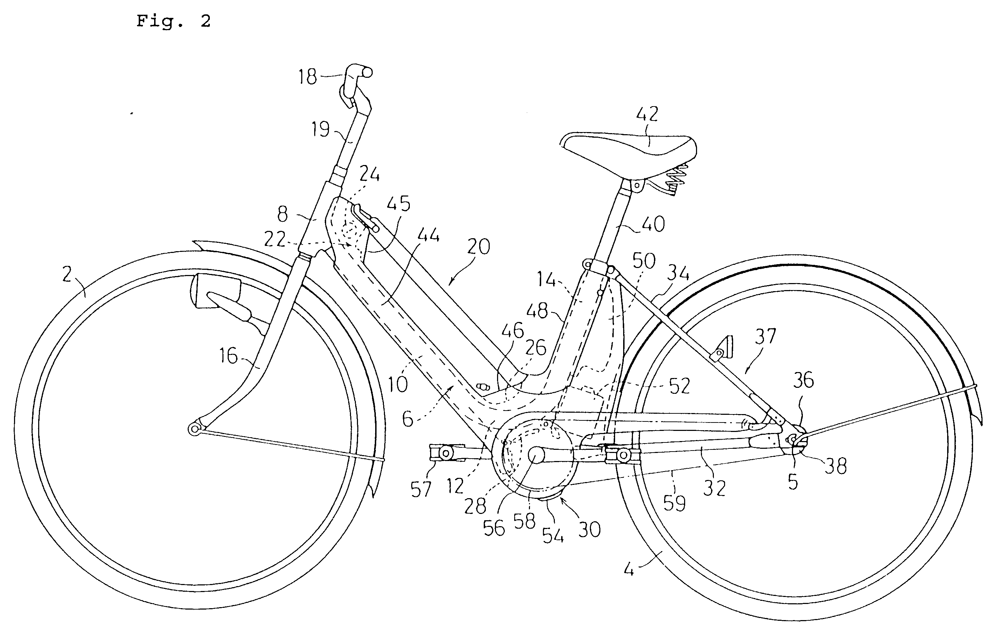

A first embodiment of the present invention is shown in Figs. 1 to 7. Fig. 2 is a side view of a motor-driven bicycle used in this embodiment. The motor-driven bicycle includes a front frame 6 which is formed in a V-shape as seen from the side and disposed between a front wheel 2 and a rear wheel 4. The front frame 6 has a main frame 10 extending obliquely, downward, and backward from a head pipe 8; an intermediate portion 12 curved downward; and a seat frame 14 extending approximately in the vertical direction.

The head pipe 8 turnably supports a front fork 16 for supporting at its lower end the front wheel 2, and a steering post 19 mounting at the upper end a handle 18. On the main frame 10, a battery case 20 for containing a battery (described later) is removably mounted between a front-side fixing portion 22 and a motor-side connector 26 functioning as a male connector. The battery case 20 has a length being approximately the same as that of the main frame 10. In addition, reference numeral 24 designates a lock device.

The intermediate portion 12 supports an auxiliary motive-power generating device 30 through a hanger plate 28. A rear fork 32, with the front end mounted to the auxiliary motive-power generating device 30, extends approximately in the horizontal direction. The rear end of the rear fork 32 is connected to a bracket 36, together with the rear ends of a pair of right and left rear stays 34 extending obliquely and downward from the upper end of the seat frame 14, to form a rear frame 37. The bracket 36 rotatably supports a rear axle 5 of the rear wheel 4 and a driven sprocket 38.

A saddle seat 42 is supported on the upper end portion of the seat frame 14 through a seat post 40. The surroundings of the front frame 6 and the auxiliary motive-power generating device 30 are covered with a body cover 44. The body cover 44 is divided into right and left parts. The front end portion of the body cover 44 covers the front-side fixing portion 22, and is continuous to an inclined wall 45.

An inclined wall 46 is formed, on the front end portion of the body cover 44 which covers the lock device, in such a manner as to be inclined obliquely, backward, and upward. A front portion of the seat frame 14 has an opening portion which is blocked by a front panel 48.

The auxiliary motive-power generating device 30 includes a control unit 50, a motor 52 and a transmission 54. A crank shaft 56, an output shaft of the transmission 54 is rotated integrally with a drive sprocket 58 for rotating the driven sprocket 38 of the rear wheel 4 through a chain 59.

Pedals 57 are mounted on the crank shaft 56, which are stepped on to be manually driven. At this time, the motor 52 is rotated by an electric-power supplied from a battery in the battery case 20, to generate an auxiliary motive-power. The control unit 50 controls rotation of the motor 52 on the basis of a torque transmitted from the pedals 57 and the rotational frequency of the drive sprocket 58.

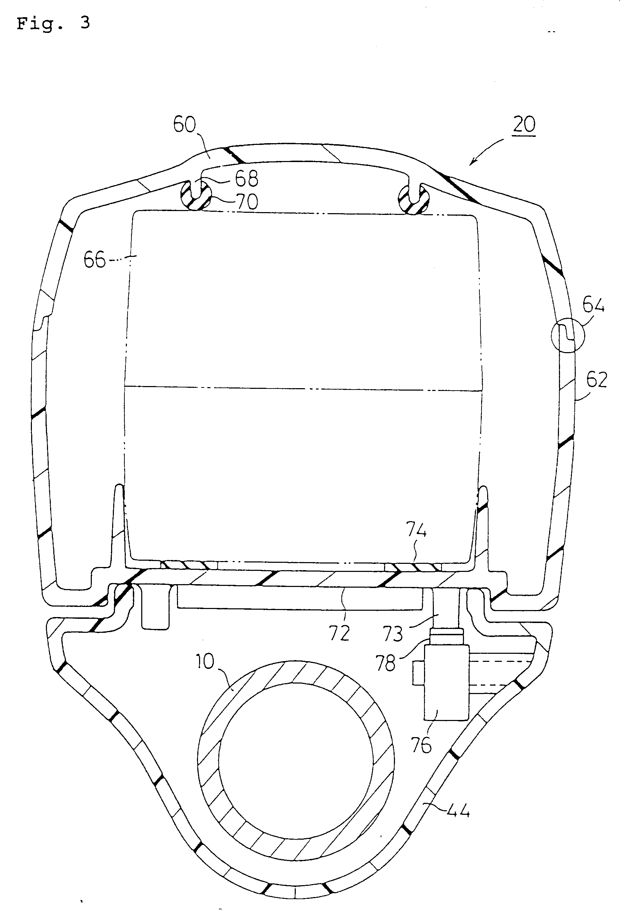

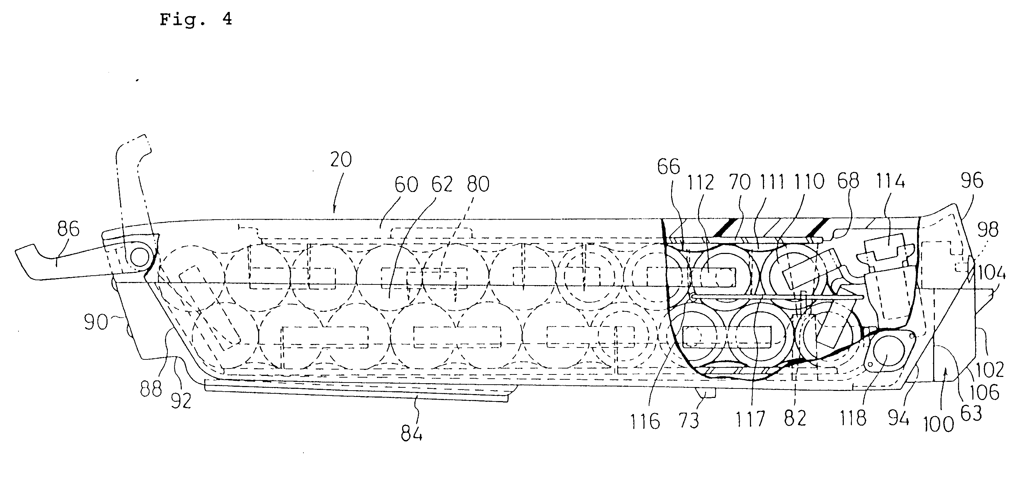

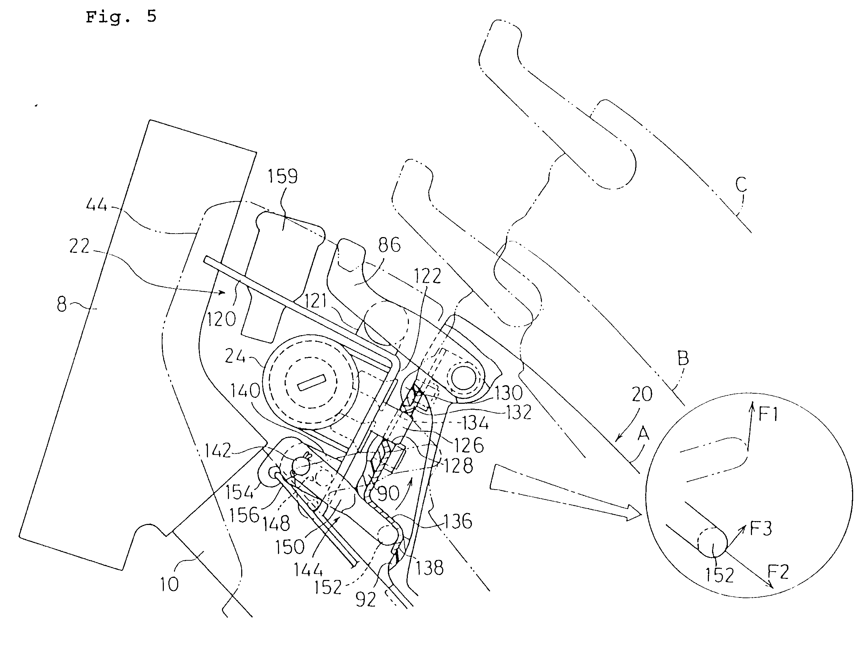

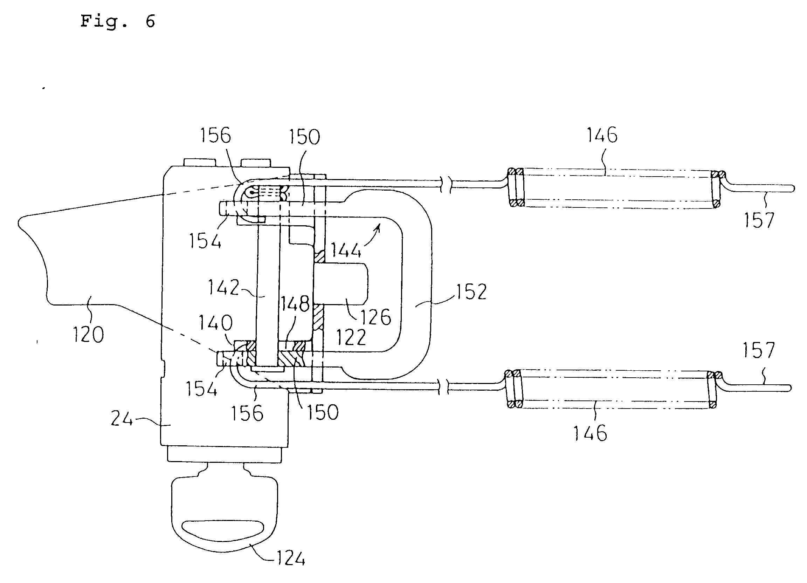

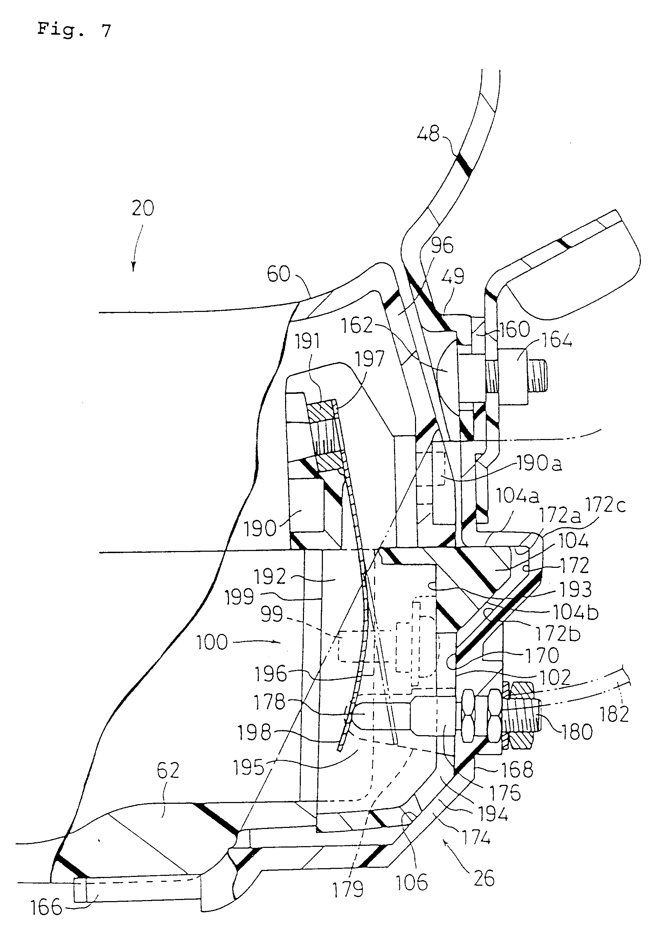

Fig. 1 is a side view of the front frame 6 portion in the state that the body cover 44 is removed; Fig. 3 is a sectional view taken along the line 3-3 of Fig. 1; Fig. 4 is a side view of the battery case 20, with parts partially cut-away; Fig. 5 is a view showing a structure of mounting the front side of the battery case 20; Fig. 6 is a view showing essential portions of the structure shown in Fig. 5, as seen from the bottom (in the direction of the arrow Z of Fig. 1); and Fig. 7 is a view showing a structure of mounting the rear side of the battery case 20.

As shown in Fig. 1, the front-side fixing portion 22 is provided on the front end portion of the main frame 10, and the motor-side connector 26 is provided in the vicinity of the intermediate portion 12. The battery case 20 can be shifted between a mounting position shown by the solid line A, and a pop-up position shown by the virtual line B. At the mounting position, the front end portion of the battery case 20 is locked by the lock device 24 in the state that the rear end portion thereof is fitted to the motor-side connector 26. On the other hand, at the pop-up position, the front end portion of the battery case 20 is lifted after being released in locking.

At a position shown by the virtual line C, the battery case 20 is removed in the direction approximately perpendicular to the longitudinal direction of the main frame 10 (in the direction shown by the arrow X). The position shown by the virtual line C also shows the state before the battery case 20 is mounted. In addition, when being shifted between the mounting position A and the pop-up position B, the battery case 20 can be slid approximately along the longitudinal direction of the main frame 10 (in the direction shown by the arrow Y).

As shown in Fig. 3, the battery case 20 is a plastic member vertically divided into an upper case 60 and a lower case 62. Mating faces 64, 64 of both the cases 60 and 62 are each stepped, and are overlapped at the stepped portions, to form a labyrinth structure for preventing permeation of water.

A battery pack 66 is contained in the battery case 20. The upper portion of the battery pack 66 abuts rubber made grooved members 70 mounted on ribs 68 projecting donward from the inner surface of the upper case 60. On the other hand, the lower portion of the battery pack 66 abuts rubber made flat cushions 74 interposed between the bottom of the battery pack 66 and the bottom 72 of the lower case 62. The battery pack 66 is thus supported in the battery case 20 in such a manner as to be isolated from vibration.

In Fig. 3, reference numeral 76 designates a limit switch which is mounted on the inner surface of the body cover 44. When the battery case 20 is mounted on the body cover 44, a projection 73 projecting downward from the bottom 72 of the lower case 62 pushes down a downward extending plate spring 78. At this time, by the lowering of the plate spring 78, the limit switch 76 is turned on. On the other hand, the limit switch 76 is turned off when the battery case 20 is located at the pop-up position (described later).

As shown in Fig. 4, the upper and lower cases 60, 62 of the battery case 20 are engaged with each other by means of an engagement claw 80 projecting upward from the lower case 62 on the first half of the side surface of the battery case 20, and are fastened to each other by a tapping screw 82 on the second half of the side surface of the battery case 20. In this way, the upper and lower cases 60, 62 are separably integrated with each other. A rubber cushion member 84 is interposed between the first half of the bottom of the lower case 62 and the main frame 10 side.

A handle 86 is turnably mounted on the front end portion of the battery case 20. An inclined stepped portion 88 is stepped from a front surface 90 of the battery case 20 into a shape corresponding to that of the inclined wall 45 provided at the front end portion of the body cover 44 for covering the front side fixing portion 22 (see Fig. 1). A pressing stepped portion 92 is formed in the lower portion of the front surface 90 in such a manner as to cut into the front surface 90.

A rear inclined surface 94 is formed on the rear end portion of the battery case 20 in such a manner as to be inclined obliquely, backward, and upward. The rear inclined surface 94 has a shape corresponding to that of the inclined wall 46 provided on the front end portion of the body cover 44 (see Fig. 2). A rear surface 96 of the upper case 60 is inclined in a shape having an inverse slope to that of the rear inclined surface 94.

A battery-side connector 100 functioning as a female connector is mounted on the rear end portion of the battery case 20 by means of a vis 98 or the like. A rear surface 102 of the battery-side connector 100 forms a butt surface against the motor-side connector (described later). A positioning engagement projection 104, which is formed approximately into a triangular shape as seen from the side, projects from the center of the butt surface of the battery-side connector 100. The rear end of the bottom of the battery-side connector 100 forms a guide inclined surface 106 inclined backward and upward.

The battery pack 66 is composed of a combination battery which packs the surroundings of a plurality of unit cells 110 with a heat-contractive tube 111. In addition, the unit cells 110 are arranged in such a manner that two sets of unit cells each connected in series are stacked in the vertical direction. The unit cell 110 is of a charging type, for example, a Ni-Cd type.

The adjacent unit cells 110 are connected in series through each conducting plate 112, and are connected to a discharge terminal (described later) of the battery-side connector 100 through a fuse 114. In Fig. 4, reference numeral 116 designates a temperature detecting thermistor; 117 is a lead wire of the thermistor; and 118 is a charge terminal.

The charge terminal 118 contains a reverse-current preventing diode, and is mounted on the rear surface of the lower case 62. Since being provided separately from the discharge terminal, the charge terminal 118 enables the battery to be charged even when the battery case 20 is mounted or when it is removed.

Fig. 5 shows a detailed structure of the front-side fixing portion 22 for fixing the battery case 20. The front-side fixing portion 22 includes the lock device 24 and a pop-up mechanism. The lock device 24 is mounted on a vertically extending upright wall 122 of a front bracket 120 approximately L-shaped in section. The front bracket 120 is provided between the head pipe 8 and the front end portion of the main frame 10.

The lock device 24 has a combination switch function of turning on/off a power source using a key 124 (see Fig. 6) and of locking/unlocking the battery case 20 by inserting a lock pin 126 in a lock hole 128 formed in the front surface 90.

The key-position of the lock device 24 is as follows. At the on-position, the lock pin 126 is in the locking state, and the key 124 cannot be removed and a current is carried from the battery pack 66 to the motor 52. On the other hand, at the off-position, a current-carrying is stopped and the key 124 can be removed, but the lock pin 126 is left in the locking state. When the off-position is shifted to the lock position by pushing and turning the key 124, the lock pin 126 is released so that the battery case 20 can be removed.

In addition, a lock plate 132 is mounted inside the front surface 90 by means of a vis 130 for reinforcing the front surface 90. An opening portion 134 corresponding to the lock hole 128 is formed in the lock plate 132. The lower end portion of the lock plate 132 extends up to the pressing stepped portion 92 and forms an exposed curved portion which constitutes longitudinal butt surface 136 to be butted upon unlocking and a butt surface 138 to be butted upon locking (see Fig. 5).

As shown in Fig. 6, the pop-up mechanism includes a pair of stays 140 provided on the upright wall 122 under the lock device 124; a rocking arm 144 supported by the stays 140 through a slide shaft 142; and tension springs 146 biasing the rocking arm 144 to turn it counterclockwise.

The stays 140 projects forward while being spaced at an interval in the vehicular body width direction. A slot 148 extending longer in the longitudinal direction is formed in each of the stays 140 for allowing the slide shaft 142 to be movable in the longitudinal direction. On the other hand, the rocking arm 144 is approximately U-shaped, and a pair of right and left flat portions 150 of the rocking arm 144 are each overlapped on the outer surfaces of the stays 140.

The slide shaft 142 extends to cross the right and left flat portions 150 through the slots 148 of the right and left stays 140, and is connected to the rocking arm 144 in such a manner that the rocking arm 144 is movable in the longitudinal direction relative to the stays 140 and is rockable around the slide shaft 142.

A portion of the rocking arm 144, which extends in the vehicular body width direction and connects the right and left flat portions 150 to each other, forms a butting portion 152. The butting portion 152 is to be butted to the butt surface 136 (to be butted upon unlocking) or the butt surface 138 (to be butted upon locking) of the lock plate 132.

The tension springs 146 are coil springs longitudinally extending along the right and left side surfaces of the main frame 10. With respect to the tension springs 146, front-side mounting portions 156 thereof are each locked with mounting projections 154 projecting from the front ends of the flat portions 150, and rear-side mounting portions 157 thereof are each locked with projections 158 projecting from the side surfaces of the main frame 10.

The tension springs 146 usually bias the rocking arm 144 backward, and also bias the butting portion 152 to turn it counterclockwise. Accordingly, at the pop-up position shown by the virtual line B, the rocking arm 144 is drawn backward and the slide shaft 142 is moved to the rear ends of the slots 148, so that the butting portion 152 pushes up the butt surface 136 (to be butted upon unlocking). As a result, the tensile strength of the tension springs 146 almost acts as a pushing-up force F1.

In the state of mounting the battery case 20 shown by the solid line A, the butt surface 136 (to be butted upon unlocking) pushes down the butting portion 152 clockwise, and the rocking arm 144 is positioned to be approximately parallel to the length direction of the main frame 10. As a result, the butting portion 152 is pushed forward against the rocking arm 144 by the butt surface 138 (to be butted upon locking), and the slide shaft 142 is moved to the front ends of the slots 148.

Thus, by the reaction of the tension springs 146, the butting portion 152 pushes the butt surface 136 (to be butted upon unlocking) and the butting surface 138 (to be butted upon locking). In this case, a force F2 applied by the butting portion 152 for pressing the butt surface 138 (to be butted upon locking) backward is very larger than a force F3 applied by the butting portion 152 for pushing up the butt surface 136 (to be butted upon unlocking). The pushing-up force F3 is sufficient to pop-up the front portion of the battery case 20 when the lock device 24 is released.

At the pop-up position, the slide shaft 142 is moved to the rear ends of the slots 148, and the butting portion 152 is turned counterclockwise to push up the butt surface 136 (to be butted upon unlocking).

In Figs. 1 and 5, reference numerals 121 and 159 designate indicators provided on the upper portion of the front bracket 120 for indicating the on-positions of the mounting stays 140 and the lock device 24 respectively.

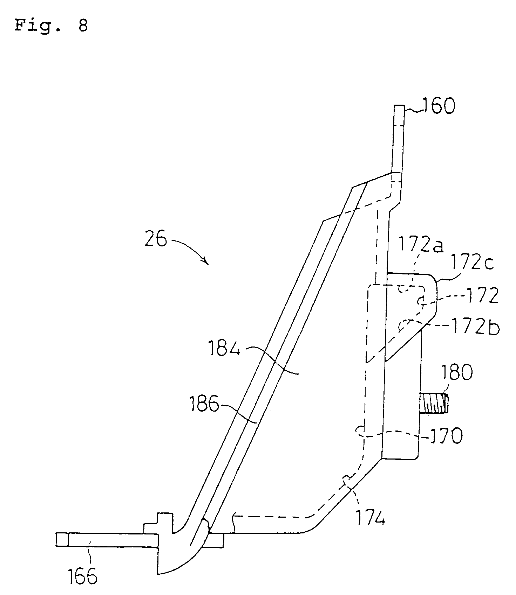

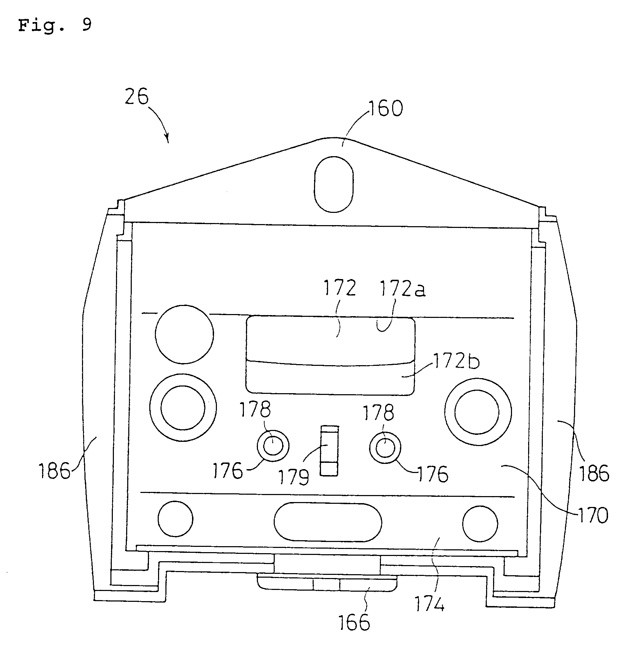

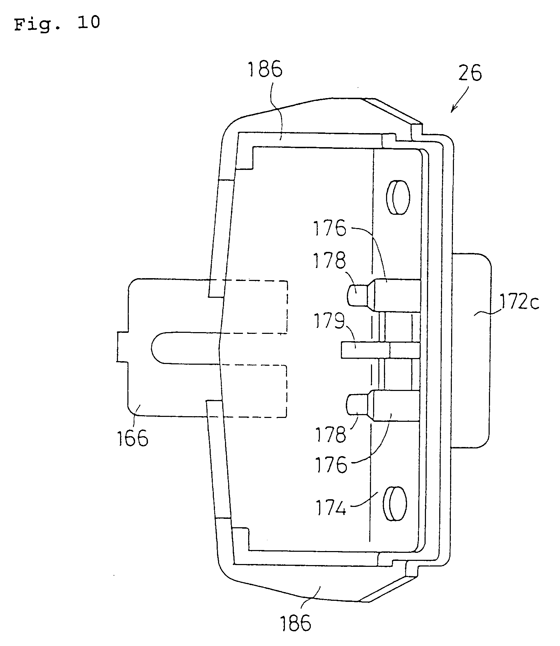

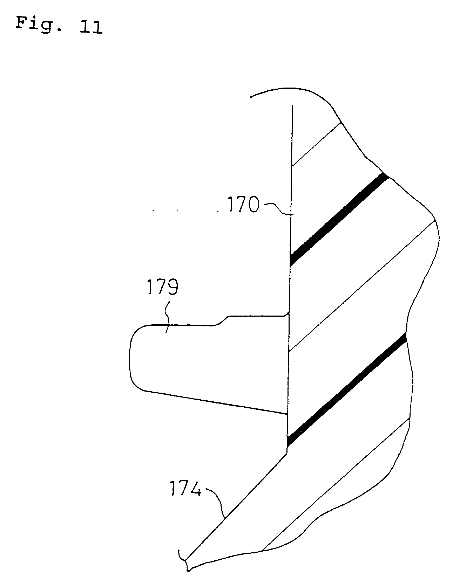

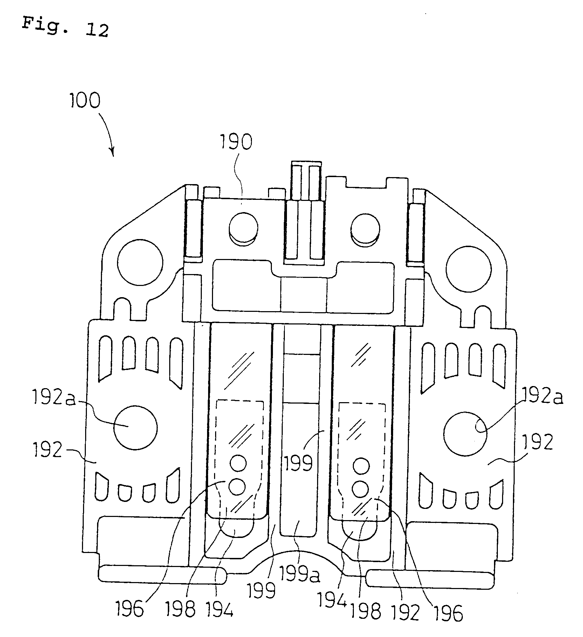

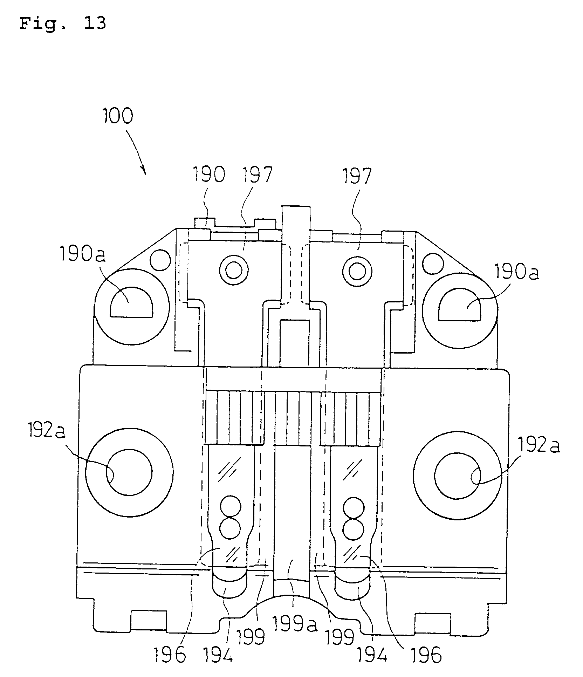

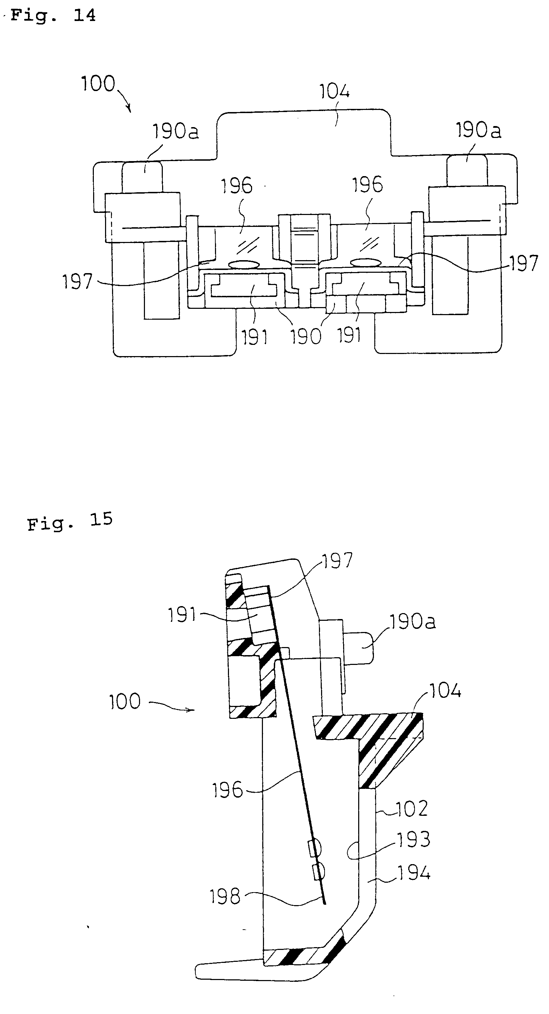

Next, the motor-side connector 26 and the battery-side connector 100 will be described. Fig. 8 is a side view of the motor-side connector 26; Fig. 9 is a front view of Fig. 8; Fig. 10 is a plan view of Fig. 8; Fig. 11 is an enlarged view of a positioning projection (described later); Fig. 12 is a front view of the battery-side connector 100; Fig. 13 is a rear view of Fig. 12; Fig. 14 is a plan view of Fig. 12; and Fig. 15 is a sectional side view of Fig. 12.

The motor-side connector 26 is provided in the vicinity of the intermediate portion 12 of the main frame 10. As shown in Figs. 7 and Figs. 8 to 11, an upper mounting portion 160 of the motor-side connector 26 is overlapped on a front center portion 49 of the lower end portion of the opening/closing portion 48 and mounted thereto by means of a vis 162 and a nut 164. In addition, the inclination of the front center portion 49 is set to correspond to that of the rear surface 96 of the lower case 60 upon mounting of the battery case 20.

A lower mounting portion 166 of the motor-side connector 26 is mounted on the body cover 44 by means of a vis or the like (not shown).

On the inner surface side of a rear surface 168 of the motor-side connector 26, an abutment surface 170 is formed. When the battery-side connector 100 is mounted, the rear surface 102 of the battery-side connector 100 abuts the abutment surface 170, to position the longitudinal direction of the battery. A projection 172c projects backward from the position corresponding to the positioning engagement projection 104 of the battery-side connector 100. And, the projection 172c having on its inner side an engagement recess 172 for receiving the positioning engagement projection 104. A guide surface 174 having an inclination being approximately the same as that of the guide inclined surface 106 of the battery-side connector 100 is formed at the position corresponding the guide inclined surface 106.

The engagement recess 172 is formed to be larger than the engagement projection 104. When the battery case 20 is mounted, a top portion 104a of the engagement projection 104 abuts a top portion 172a in the engagement recess 172, so that the battery case 20 is positioned in the vertical direction.

Lower-side inclined surfaces 172b and 104b of the engagement recess 172 and the engagement projections 104 are formed so as to be nearly equal to each other in inclination and to be separated from each other at a slight interval.

A pair of pin-like motor terminals 176 are provided on both sides of the abutment surface 170. Leading ends 178 of the motor terminals 176 project in the battery case 20. On the other hand, rear ends 180 of the motor terminals 176 exteriorly extend from the rear surface 168, and are connected to cords 182. The cords 182 are connected to the control unit 50 (see Fig. 2).

A pair of side wall portions 184 for receiving the batter-side connector 100 are formed on both sides of the motor-side connector 26. Front edge portions 186 of the side wall portions 184 abut the inclined wall 46 of the battery case 46 (see Fig. 2). A positioning projection 179 projects from the intermediate portion between the right and left motor terminals 176 so as to be integrated with the abutment surface 170 (see Fig. 11). The leading end of the positioning projection 179 projects forward in such a manner as to be longer than the leading ends of the motor terminals 176 (See Fig. 10).

Next, the battery-side connector 100 will be described with reference to Fig. 7 and Figs. 12 to 15. An upper portion 190 of the battery-side connector 100 is positioned inside the upper case 60. With this upper portion 190 of the battery-side connector 100, positioning projection 190a, 190a are fitted to the rear surface 96 of the upper case 60.

Lower portions 192 of the battery-side connector 100 are mounted to the lower case 62 by means of vises 99 fastened from the outside of the rear wall 63 (see Fig. 4) of the lower case 62 via through-holes 192a, 192a. The rear-side center portion of the lower portion 192 forms a projecting portion 193 projecting outward and rearward from the center portion of the rear wall 93. On the projecting portion 193, the rear surface 102 and the engagement projection 104 are formed, and further a pair of right and left terminal-passing holes 194 are formed at the positions corresponding to the motor terminals 176.

The terminal-passing holes 194 are communicated to recesses 195 formed in the lower portion 192 on the lower case 62 side. The motor terminal 176 has a length allowing the leading end 178 thereof to project in the recess 195 through the terminal-passing hole 194 upon mounting of the battery case 20.

A plate spring-like discharge terminal 196 is disposed in the recess 195 in such a manner as to extend longer in the vertical direction. The upper end of the discharge terminal 196 has an approximately U-shaped portion 197. The U-shaped portion 197 is inserted in a slit formed on the upper portion 190, and fastened together with a lead wire extending from the battery pack 66 by means of a vis (not shown) and a nut 191 previously fixedly inserted in the slit.

A free lower end 198 of the discharge terminal 196 is positioned to cover the exit, facing to the recess 195, of the terminal-passing hole 194, as shown by the virtual line in Fig. 7. When the leading end 178 of the motor terminal 176 projects in the recess 195 through the terminal-passing hole 194 upon mounting of the battery case 20, the lower free end 198 is pushed forward and elastically deformed by the leading end 178 as shown by the solid line in Fig. 7. As a result, the lower free end 198 of the discharge terminal 196 is brought in contact with the leading end 178 of the motor terminal 176 at a high contact pressure.

Between the right and left terminal-passing holes 194, a pair of ribs 199 spaced in parallel at a specified interval are vertically disposed. Along a portion put between the ribs 199, a slot 199a extends longer in the vertical direction (see Figs. 12 and 13). When the battery-side connector 100 is mounted on the motor-side connector 26, the positioning projection 179 of the motor-side connector 26 is inserted in the slot 199a.

At the mounting position (solid line A) and the pop-up position (virtual line B) of the battery case 20 in Fig. 1, a current-carrying state occurs when the leading ends 178 of the motor terminals 176 are contacted with the lower free ends 198 of the discharge terminals 196 through the terminal-passing holes 194. To cope with this inconvenience, the limit switch 76 functions as follows: namely, at the pop-up position, the limit switch 76 is turned off for cutting off a current flowing from the lower free end 198 to the leading end 178, and only at the mounting position, the limit switch 76 is turned on for allowing a current to flow from the lower free end 198 to the leading end 178.

The motor-side connector 26 is connected to or separated from the rear side of the battery case 20 by sliding the battery case 20 in the direction shown by the arrow Y in Fig. 1. In such a state, the motor-terminals 176 are connected to or separated from the discharge terminals 196 of the battery-side connector 100, and at the same time the engagement projection 104 of the battery-side connector 100 is inserted in or separated from the engagement recess 172 of the motor-side connector 26. At this time, the stroke amount of the battery case 20 in the Y direction is determined by the stroke amount of the slide shaft 142.

The function of this embodiment will be described below. At the mounting position shown by the solid line A in Fig. 1, the battery-side connector 100 provided at the rear end portion of the battery case 20 is butted and fixed to the motor-side connector 26.

By this connection between both the connectors, the battery case 20 are positioned accurately in three-dimensional directions. The motor-terminals 176 can be thus accurately contacted with the discharge terminals 196 with no effect of dimensional errors of the battery case 20. Moreover, since the backlash between both the contacts is reduced, it becomes possible to make smaller wear of the contacts.

In addition to the positioning of both the connectors by butting, the vertical direction of the battery case 20 can be positioned by fitting the engagement projection 104 in the engagement recess 172; and the horizontal direction of the battery case 20 can be positioned by fitting the rear ends 94 of the battery case 20 in the right and left side walls 184 of the motor-side connector 26. As a result, the connection between both the terminals can be further ensured.

The battery case 20 is also pushed backward by the tension spring 146 through the rocking arm 144, to generate a pressing force acting in the direction of connecting the motor terminals 176 to the discharge terminals 196, thus increasing the contact pressure applied between the lower free end 198 of the discharge terminal 196 and the leading end 178 of the motor terminal 176. Such a high contact pressure prevents variations in contact pressure such as chattering between both the terminals due to vibration of the vehicle. This is effective to suppress wear of the contacts, and to prolong the service life of the terminals.

At this time, since the plate spring-like lower free end 198 is contacted with the leading end 178 while being elastically deformed, the contact pressure is easily enhanced. Also, since the battery case 20 is inclined forward, obliquely and upward, an increase in contact pressure by the dead weight can be expected.

In the case of removing the battery case 20, the lock device 24 is released by turning the key 124. At this time, the rocking arm 144 is returned by a spring force of the tension springs 146 until the slide shaft 142 reaches the rear ends of the slots 148. At the same time, the rocking arm 144 is rocked counterclockwise, to push up the front portion of the battery case 20. The battery case 20 is thus located at the pop-up position shown by the virtual line B in Figs. 1 and 5. After that, the handle 86 of the battery case 20 is pulled up in the direction approximately perpendicular to the length direction of the main frame 10 (in the direction by the arrow X in Fig. 1). In this way, the battery case 20 can be easily removed as shown by the virtual line C.

On the other hand, when being mounted, the battery case 20 is positioned over the main frame 10 approximately in parallel thereto, and is moved down in the direction approximately perpendicular to the length direction of the main frame 10 (in the direction shown by the arrow X in Fig. 1). The battery case 20 is then slid rearward approximately in parallel to the length direction of the main frame 10 (in the direction shown by the arrow Y in Fig. 1). After that, the battery-side connector 100 provided on the rear end of the battery case 20 is fitted to the motor-side connector 26.

Thus, the engagement projection 104 is fitted in the engagement recess 172, and at the same time the motor terminals 176 enter the discharge terminals 196 so that the leading ends 178 thereof are connected to the lower free ends 198 of the discharge terminals 196. Such actions are smoothly and certainly performed by positioning of the motor-side connector 26. At this time, the leading ends 178 is in the state being electrically conductive to the lower free ends 198; however, since the limit switch 76 is turned off, no current is carried therebetween, to thereby enhance the durability of terminals.

In this state, the rocking arm 144 is located at the position shown by the virtual line in Fig. 1, and the butt surface 136 (to be butted upon unlocking) of the front portion of the battery case 20 is butted to the butting portion 152 of the rocking arm 144. At this time, the pushing-up force of the tension spring 146 applied to the butting portion 152 supports the weight of the battery case 20. As a result, the battery case 20 is located at the pop-up position in which the front side thereof is slightly lifted upward as shown by the virtual line B.

In the case where the battery case 20 is not locked by the lock device 24, the battery case 20 is unstable. When the vehicle runs in such an unstable condition, there is a fear in generating slip-off of the battery case 20 or a failure in current-carrying between the motor terminals 176 and the lower free ends 198 of the discharge terminals 196. In this embodiment, however, when being not locked, the battery case 20 is necessarily located at the pop-position. As a result, an unstable condition of the battery case 20 can be visually observed.

Next, the front end portion of the battery case 20 is pressed down. At this time, the butt surface 136 (to be butted upon unlocking) presses down the butting portion 152 clockwise, and thereby the rocking arm 144 is slid forward until the slide shaft 142 is moved up to the front ends of the slots 148. The rocking arm 144 is thus located at the position shown by the solid line in Fig. 1.

In such a position, the front end portion of the battery case 20 is locked with the lock device 24 by operation of the key 124. Of the spring force of the tension spring 146 applied to the butting portion 152, a component of pressing the butt surface 138 (to be butted upon locking) is increased, to thereby press rearward the battery case 20. The batter-side connector 100 is thus forcibly pressed in the motor-side connector 26, to be certainly fixed thereto.

At this time, the guide inclined surface 106 is guided along the guide surface 174, so that the top portion 104a of the engagement projection 104 abuts the top surface 172a of the engagement recess 172. The battery case 20 is thus vertically positioned. Moreover, the leading ends 178 of the motor terminals 176 enter deeply in the recesses 195, and thereby the lower free ends 198 of the discharge terminals 196 are elastically deformed to a large extent in the forward direction.

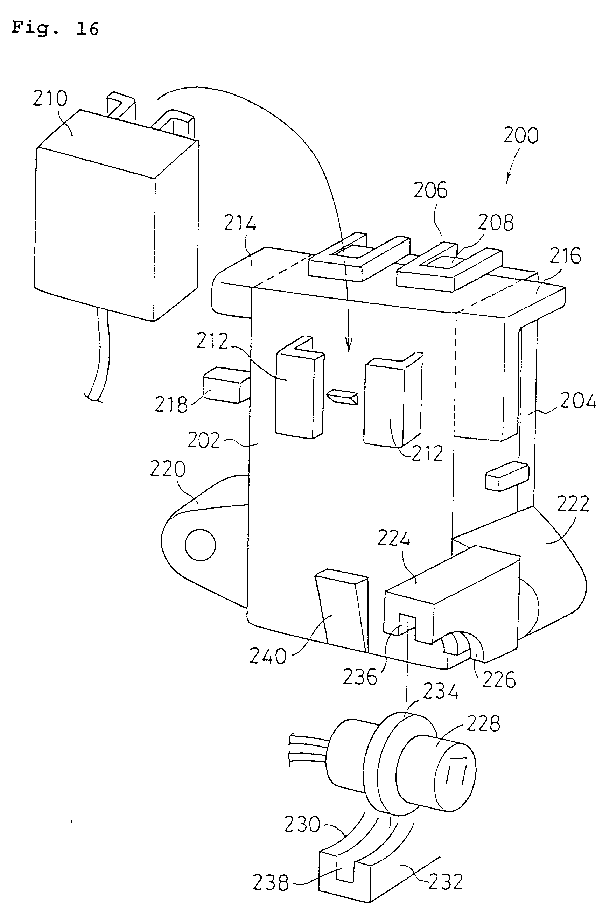

A second embodiment of the present invention will be described with reference to Figs. 16 to 24. In this embodiment, the battery case is not positioned by butting connectors to each other as in the first embodiment but is positioned using the positioning guide upon connection of the connectors.

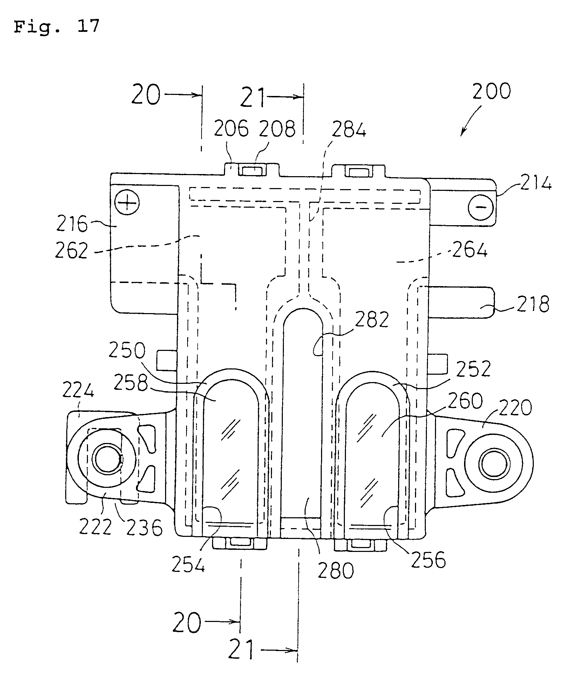

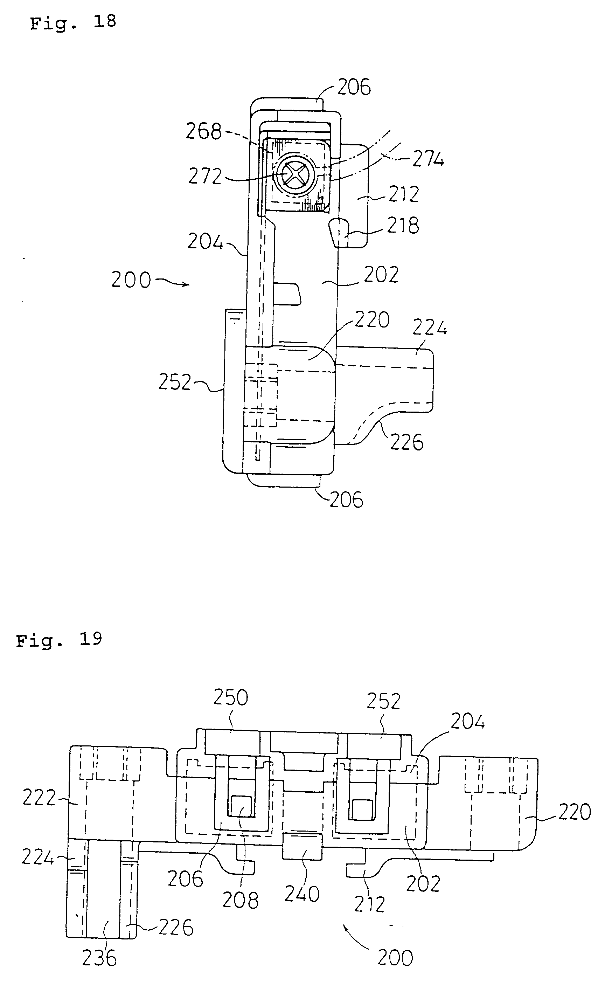

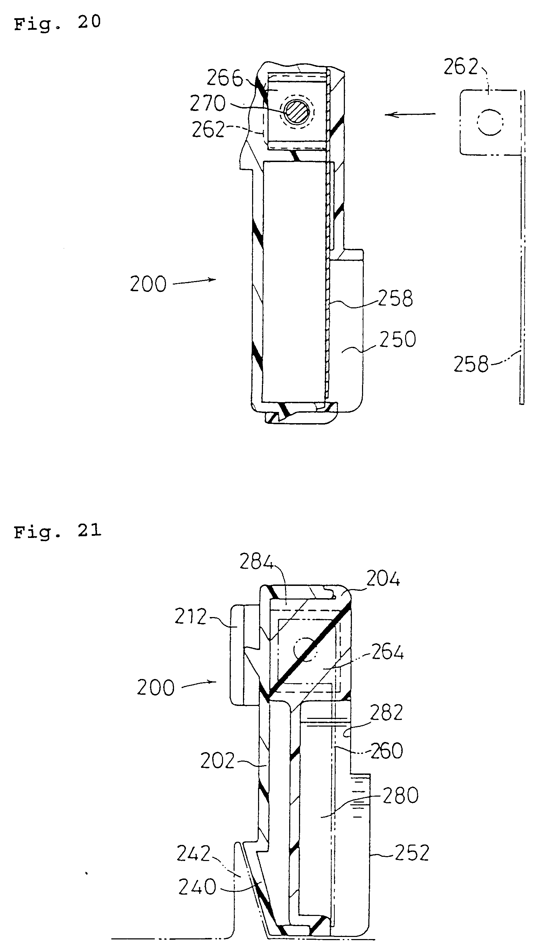

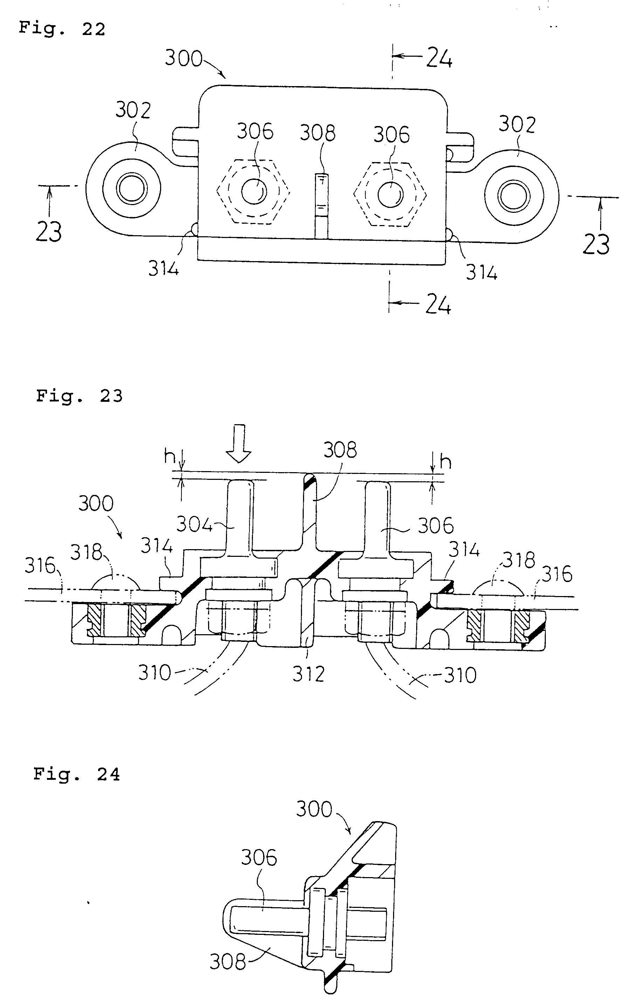

Figs. 16 to 21 shows a female type battery-side connector 200, and Figs. 22 to 24 shows a male type motor-side connector 300. First, the battery-side connector 200 will be described. Fig. 16 is a perspective front view of the battery-side connector; Fig. 17 is a rear view of Fig. 16; Fig. 18 is a side view of Fig. 16; Fig. 19 is a bottom view of Fig. 16; Fig. 20 is a sectional view taken along the line 20-20 of Fig. 17; and Fig. 21 is a sectional view taken along the line 21-21 of Fig. 17.

Referring to these figures, the battery-side connector 200 has a case including a front case 202 and a back case 204. The front and back cases 202, 204 are integrated to each other by engagement of engagement projections 206 formed on the front case 202 with engagement members 208 formed on the back case 204.

As shown in Fig. 16, engagement portions 212 for fixing a fuse holder 210 are integrally formed on the front case 202 in such a manner as to project from the surface of the front case 202. On both upper side portions of the front case 202, contact preventive ribs 214, 216 are formed in such a manner as to project sideward. A negative lead wire extending from the battery is connected to a portion of the front case 202 which is covered with the contact preventive rib 214, while a positive lead wire extending from the battery is connected to a portion of the front case 202 which is covered with the contact preventive rib 216. A turning-stop rib 218 is integrally formed on the front case 202 at a position under the contact preventive rib 214 in such a manner as to project sideward.

Mounting projections 220, 222 to be mounted on the battery case side are formed on both the lower side portions of the front case 202. A holding rib 224 is formed on the mounting projection 222 in such a manner as to project forward. A cut-out portion 226, which is cut out in a curved shape, is formed in the holding rib 224. On the other hand, a holding rib 232 having a cut-out portion 230 formed in a shape symmetric to that of the cut-out portion 226 is formed in the battery case. A charge coupler 228 is held between the holding rib 224 and the holding rib 232 of the battery case. At this time, a flange 234 of the charge coupler 228 is fitted in grooves 236, 238 respectively formed in the cut-out portions 226, 230, so that the charge coupler 228 is accurately positioned.

A movement preventive stepped portion 240 having an inclination is formed at the center of the front lower end portion of the front case 202. When the battery-side connector 200 is connected to the motor-side connector 300, the stepped portion 240 abuts a movement preventive rib 242 projecting from the bottom of the battery case (see Fig. 21). Thus, when being pushed forward, the battery-side connector 200 is not moved, so that the contact pressure can be ensured. In addition, the structure of the battery case mounted with the battery-side connector 200 is the same as that in the first embodiment, and therefore, the explanation thereof is omitted.

As shown in Fig. 17, on the back case 204, arch-like ribs 250, 252 are formed at the right and left portions of the lower side. Terminal fitting grooves 254, 256 are formed in respective portions surrounded by the ribs 250, 252 (see Fig. 20). The opening portions of the terminal fitting grooves 254, 256 are blocked from the inner side by respective free ends of terminal plates 258, 260.

The other ends of the terminal plates 258, 260 form fixing ends 262, 264, each of which is folded in an approximately U-shape. The terminal plate 258 (having the same structure of that of the terminal plate 260) is contained in the battery-side connector 200, and is covered with the back case 204. The terminal plate 258 is then mounted on the back case 204 at the fixing end 262 by means of nuts 266 previously fitted on the front case side and a screw 270 (see Fig. 20).

Fig. 20 shows the battery-side connector in the state that the terminal plate 258 is removed. The terminal plate 258 is mounted in the same mounting direction of the back case 204 before the back case 204 is mounted, and the folded fixing end 262 is overlapped on the nut 266. Fig. 18 is a side view of Fig. 17. Referring to Fig. 18, the fixing end 264 is fixed to the nut 268 by a screw 272 together with a lead wire 274. The mounting of the terminal plate 258 side is the same as described.

As shown in Figs. 17 and 21, a guide groove 280 is formed longer in the vertical direction between the right and left ribs 250, 252. A lower wall portion 282 of the guide groove 280 partitions the terminal fitting grooves 254, 256 from each other, while an upper bulkhead-like short-circuit preventive rib 284 partitions the fixing ends 262, 264 from each other. This short-circuit preventive rib 284 makes it possible to ensure a sufficient creeping distance between the fixing ends 262, 264, and hence to prevent the short-circuit thereof.

In addition, since the terminal plates 258, 260 are partitioned by the wall portion 282 and the rib 250 (252) largely projects from the surface of the terminal plate 258 (260), it becomes possible to increase a creeping distance between the terminal plates 258, 260 and hence to prevent the short-circuit thereof.

Next, the motor-side connector 300 will be described. Fig. 22 is a front view of the motor-side connector 300; Fig. 23 is a sectional view taken along the line 23-23 of Fig. 22; and Fig. 24 is a sectional view taken along the line 24-24 of Fig. 22. Referring to these figures, mounting projections 302 to be mounted on the vehicular body side are mounted on both sides of the motor-side connector 300. A pair of terminals 304, 306 are provided at the right and left positions on the motor-side connector 300 in such a manner as to project to the battery-side connector side. Between the terminals 304, 306, a guide projection 308 projects for separating the terminals 304, 306 from each other.

The terminals 304, 306 are disposed at such positions as to be fittable in the terminal fitting grooves 254, 256 of the battery-side connector 200, respectively. The guide projection 308 is also disposed at such a position as to be fittable in the guide groove 280.

As shown in Fig. 24, the guide projection 308 is longer in size than the terminals 304, 306 in the vertical and longitudinal directions for preventing discharge between the terminals 304, 306. The leading end of the guide projection 308 is slender and is formed in an approximately triangular shape for making easy the fitting in the guide groove 280. Moreover, if a linear conductor is placed between the terminals 304, 306, the guide projection 308 can prevent the contact thereof.

On the back surface of the motor-side connector 300, the terminals 304, 306 are connected to lead wires 310 from the controller 50, and the connecting portions thereof are separated from each other by a rib 312.

As shown in Fig. 23, movement preventive projections 314 are integrally formed on both side portions of the terminals 304, 306 near the bases thereof in such a manner as to project sideward. When the motor-side connector 300 is mounted to body-side members 316 at the mounting projections 302 by screws 318, the movement preventive projections 314 hold the end portions of the body-side members 316. As a result, even when the screws 318 are loosened, the body-side members 316 are difficult to be separated from the motor-side connector 300.

The function of this embodiment is as follows. When the battery case is mounted to a vehicular body in the same manner as in the first embodiment, the terminals 304, 306 of the motor-side connector 300 are respectively fitted in the terminal fitting grooves 254, 256 of the battery-side connector 200, to be thus contacted with the terminal plates 258, 260 at a high contact pressure. At this time, the guide projection 308 is fitted in the guide groove 280, and consequently, the terminals 304, 306 can be accurately positioned to the corresponding terminal plates 258 and 260, respectively.

In the battery case mounting structure for a motor-driven vehicle according to the present invention, a battery-side connector is fitted and butted to a motor-side connector. Since the battery-side connector is fitted and butted to the motor-side connector upon mounting of the battery case, the positioning between both the connectors is accurately performed. This makes it possible to ensure the connection of contacts, and hence to prevent wear of the contacts due to chattering. Also, since the positioning between the battery case and the vehicular body is performed by connection of both the connectors, the connection of the contacts is not affected by manufacturing errors of the battery case.

In the present invention, a positioning projection is provided on either the battery-side connector or the motor-side connector, while a positioning recess for receiving the positioning projection is provided on the other one. When both connectors are connected to each other, the positioning projection is fitted in the positioning recess, to further enhance the accuracy in connection of contacts.

## Claims

1. A battery case mounting structure for a motor-driven vehicle comprising:
a body frame (10) disposed along the longitudinal direction between a front wheel (2) and a rear wheel (4);
a battery case (20) for containing a battery (66), which is removably mounted on said body frame (10) in a battery mounting position (A);
a battery-side connector (100) provided on the rear end portion of said battery case (20);
a motor-side connector (26) to be connected to or separated from said battery-side connector (100), which is mounted on a vehicular body;
wherein either said battery-side connector (100) or said motor-side connector (26) is fitted and butted to the other one,
a lock device (24) for locking the front end portion of the battery case (20) in the battery mounting position (A) and
a pop-up lever mechanism (140 - 146) for elastically lifting the front end portion of the battery case (20) from the mounting position (A) to a pop-up position (B) when the lock device (24) is released.

2. A battery case mounting structure for a motor-driven vehicle according to claim 1, further comprising a battery case pressing means (146) for pressing said battery-side connector (100) to said motor-side connector (26) when said battery case (20) is mounted in said vehicular body.

3. A battery case mounting structure for a motor-driven vehicle according to claim 1, wherein a positioning projection (104) is provided on either said battery-side connector (100) or said motor-side connector (26) and a positioning recess (172) for receiving said positioning projection (104) is provided on the other one.

4. A battery case mounting structure for a motor-driven vehicle comprising:
a body frame (10) disposed along the longitudinal direction between a front wheel (2) and a rear wheel (4);
a battery case (20) for containing a battery (66), which is removably mounted on said body frame (10) in a battery mounting position (A);
a battery-side connector (100) provided on the rear end portion of said battery case (20);
a motor-side connector (26) to be connected to or separated from said battery-side connector (100), which is mounted on a vehicular body; and
wherein a positioning projection (104) is provided on either said battery-side connector (100) or said motor-side connector (26) and a positioning recess (172) for receiving said positioning projection (104) is provided on the other one,
a lock device (24) for locking the front end portion of the battery case (20) in the battery mounting position (A) and
a pop-up lever mechanism (140 - 146) for elastically lifting the front end portion of the battery case (20) from the mounting position (A) to a pop-up position (B) when the lock device (24) is released.

## Patentansprüche

1. Batteriegehäuse-Anbringestruktur für ein motorgetriebenes Fahrzeug, umfassend:
einen entlang der Längsrichtung zwischen einem Vorderrad (2) und einem Hinterrad (4) angeordneten Hauptrahmen (10);
ein in einer Batterieanbringestellung (A) an dem Hauptrahmen (10) entfernbar angebrachtes Batteriegehäuse (20) zur Aufnahme einer Batterie (66);
einen am hinteren Endabschnitt des Batteriegehäuses (20) vorgesehenen batterieseitigen Verbinder (100);
einen an dem Fahrzeugrumpf angebrachten motorseitigen Verbinder (26), der mit dem batterieseitigen Verbinder (100) verbindbar oder von diesem trennbar ist;
wobei entweder der batterieseitige Verbinder (100) oder der motorseitige Verbinder (26) am jeweils anderen sitzt und anliegt,
eine Riegelvorrichtung (24) zum Verriegeln des vorderen Endabschnitts des Batteriegehäuses (20) in der Batterieanbringestellung (A) und
einen Hochspringhebelmechanismus (140-146) zum elastischen Anheben des vorderen Endabschnitts des Batteriegehäuses (20) von der Anbringestellung (A) zu einer Hochspringstellung (B), wenn die Riegelvorrichtung (24) gelöst ist.

2. Batteriegehäuse-Anbringestruktur für ein motorgetriebenes Fahrzeug nach Anspruch 1, die ferner ein Batteriegehäuse-Druckmittel (146) umfaßt, um den batterieseitigen Verbinder (100) zu dem motorseitigen Verbinder (26) zu drücken, wenn das Batteriegehäuse (20) in dem Fahrzeugrumpf angebracht ist.

3. Batteriegehäuse-Anbringestruktur für ein motorgetriebenes Fahrzeug nach Anspruch 1, wobei an entweder dem batterieseitigen Verbinder (100) oder dem motorseitigen Verbinder (26) ein Positionierungsvorsprung (104) vorgesehen ist und zur Aufnahme des Positionierungsvorsprungs (104) an dem jeweils anderen eine Positionierungsvertiefung (172) vorgesehen ist.

4. Batteriegehäuse-Anbringestruktur für ein motorgetriebenes Fahrzeug, umfassend:
einen entlang der Längsrichtung zwischen einem Vorderrad (2) und einem Hinterrad (4) angeordneten Hauptrahmen (10);
ein in einer Batterieanbringestellung (A) an dem Hauptrahmen (10) entfernbar angebrachtes Batteriegehäuse (20) zur Aufnahme einer Batterie (66);
einen am hinteren Endabschnitt des Batteriegehäuses (20) vorgesehenen batterieseitigen Verbinder (100);
einen an dem Fahrzeugrumpf angebrachten motorseitigen Verbinder (26), der mit dem batterieseitigen Verbinder (100) verbindbar oder von diesem trennbar ist;
wobei an entweder dem batterieseitigen Verbinder (100) oder dem motorseitigen Verbinder (26) ein Positionierungsvorsprung (104) vorgesehen ist und zur Aufnahme des Positionierungsvorsprungs (104) an dem jeweils anderen eine Positionierungsvertiefung (172) vorgesehen ist,
eine Riegelvorrichtung (24) zum Verriegeln des vorderen Endabschnitts des Batteriegehäuses (20) in der Batterieanbringestellung (A) und
einen Hochspringhebelmechanismus (140-146) zum elastischen Anheben des vorderen Endabschnitts des Batteriegehäuses (20) von der Anbringestellung (A) zu einer Hochspringstellung (B), wenn die Riegelvorrichtung (24) gelöst ist.

## Revendications

1. Dispositif de fixation d'un réceptacle de batterie destiné à un véhicule à moteur comprenant :
un cadre (10) disposé dans le sens longitudinal entre une roue avant (2) et une roue arrière (4);
un réceptacle de batterie (20) destiné à contenir une batterie (66), qui est monté de manière amovible sur ledit cadre (10) dans une position de fixation de la batterie (A);
un connecteur côté batterie (100) disposé sur la partie d'extrémité arrière dudit réceptacle de batterie (20);
un connecteur côté moteur (26) à connecter au dit connecteur côté batterie (100) ou à séparer de celui-ci, qui est monté sur un cadre de véhicule;
dans lequel soit ledit connecteur côté batterie (100), soit ledit connecteur côté moteur (26) est ajusté et mis en butée sur l'autre connecteur,
un dispositif de blocage (24) destiné à bloquer la partie d'extrémité avant du réceptacle de batterie (20) dans la position de fixation de la batterie (A) et
un mécanisme de dégagement à levier (140 - 146) destiné à lever de manière élastique la partie d'extrémité avant du réceptacle de batterie (20) depuis la position de fixation (A) vers une position de dégagement (B) lorsque le dispositif de blocage (24) est libéré.

2. Dispositif de fixation d'un réceptacle de batterie destiné à un véhicule à moteur selon la revendication 1, comprenant en outre des moyens de pression du réceptacle de batterie (146) destinés à appuyer ledit connecteur côté batterie (100) sur ledit connecteur côté moteur (26) lorsque ledit réceptacle de batterie est fixé dans ledit cadre de véhicule.

3. Dispositif de fixation d'un réceptacle de batterie destiné à un véhicule à moteur selon la revendication 1, dans lequel une saillie de positionnement (104) est disposée soit sur ledit connecteur côté batterie (100), soit sur ledit connecteur côté moteur (26) et un retrait de positionnement (172) destiné à recevoir ladite saillie de positionnement (104) est disposé sur l'autre connecteur.

4. Dispositif de fixation d'un réceptacle de batterie destiné à un véhicule à moteur comprenant :
un cadre (10) disposé dans le sens longitudinal entre une roue avant (2) et une roue arrière (4);
un réceptacle de batterie (20) destiné à contenir une batterie (66), qui est monté de manière amovible sur ledit cadre (10) dans une position de fixation de la batterie (A);
un connecteur côté batterie (100) disposé sur la partie d'extrémité arrière dudit réceptacle de batterie (20);
un connecteur côté moteur (26) à connecter au dit connecteur côté batterie (100) ou à séparer de celui-ci, qui est monté sur un cadre de véhicule; et
dans lequel une saillie de positionnement (104) est disposée soit sur ledit connecteur côté batterie (100), soit sur ledit connecteur côté moteur (26) et un retrait de positionnement (172) destiné à recevoir ladite saillie de positionnement (104) est disposé sur l'autre connecteur,
un dispositif de blocage (24) destiné à bloquer la partie d'extrémité avant du réceptacle de batterie (20) dans la position de fixation de la batterie (A) et
un mécanisme de dégagement à levier (140 - 146) destiné à lever de manière élastique la partie d'extrémité avant du réceptacle de batterie (20) depuis la position de fixation (A) vers une position de dégagement (B) lorsque le dispositif de blocage (24) est libéré.
